Europäisches Patentamt

European Patent Office

Office européen des brevets

(11) Numéro de publication : **0 340 090 B1**

(12) **FASCICULE DE BREVET EUROPEEN**

(19)

(45) Date de publication du fascicule du brevet :
**30.11.94 Bulletin 94/48**

(21) Numéro de dépôt : **89401153.5**

(22) Date de dépôt : **24.04.89**

(51) Int. Cl.⁵ : **G02C 7/02**

(54) **Procédé pour la minimisation de l'épaisseur maximale d'une lentille ophtalmique unifocale et lentille ophtalmique unifocale à gradient d'indice obtenue en application de ce procédé.**

(30) Priorité : **25.04.88 FR 8805435**

(43) Date de publication de la demande :
**02.11.89 Bulletin 89/44**

(45) Mention de la délivrance du brevet :
**30.11.94 Bulletin 94/48**

(84) Etats contractants désignés :
**CH DE ES GB IT LI NL**

(56) Documents cités :
**EP-A- 0 101 972**
**DE-A- 2 707 601**
**GB-A- 2 034 498**
**GB-A- 2 191 017**
**The Ophthalmic Optician, Jan 31, (1981) 72-84**

(73) Titulaire : **ESSILOR INTERNATIONAL, Cie**
**Générale d'Optique**
**1 Rue Thomas Edison,**
**Echat 902**
**F-94028 Créteil Cédex (FR)**

(72) Inventeur : **Bonbon, Emmanuel**
**10 Rue Fondary**
**F-75015 Paris (FR)**
Inventeur : **Mercier, Jean-Louis**
**3 Rue du Bon Puits**
**F-91640 Fontenay les Briis (FR)**

(74) Mandataire : **CABINET BONNET-THIRION**
**95 Boulevard Beaumarchais**
**F-75003 Paris (FR)**

## Description

La présente invention concerne d'une manière générale les lentilles ophtalmiques unifocales, c'est-à-dire de puissance constante, qu'il s'agisse de lentilles convergentes, c'est-à-dire de puissance positive, ou qu'il s'agisse de lentilles divergentes, c'est-à-dire de puissance négative.

Elle vise plus particulièrement celles de ces lentilles dont l'une et l'autre des faces, c'est-à-dire tant la face avant convexe que la face arrière concave, sont sphériques.

Ces lentilles ont pour avantage d'être relativement aisées à usiner.

Mais deux problèmes, notamment, se présentent à leur sujet.

Le premier a trait au fait que, pour des puissances relativement élevées, leur épaisseur maximale, ou épaisseur critique, qui en est l'épaisseur au centre pour une puissance positive et l'épaisseur à la périphérie pour une puissance négative, est relativement élevée, au détriment de leur esthétique, et, par le poids qui en résulte, au détriment du confort de l'usager.

Le deuxième a trait au fait que, notamment pour ces puissances élevées, les aberrations, et en particulier les aberrations d'astigmatisme et les aberrations de courbure de champ, deviennent de plus en plus importantes au fur et à mesure que l'axe de vision de l'usager s'écarte de leur axe optique.

Pour minimiser ces aberrations, il est usuellement mis en oeuvre une surface asphérique pour l'une au moins des faces, au prix d'une complication de l'usinage de celle-ci.

Le plus souvent, par ailleurs, l'indice de réfraction du matériau constitutif des lentilles ophtalmiques est uniforme.

S'agissant de lentilles ophtalmiques à faces concave et convexe sphériques, la puissance se trouve alors géométriquement déterminée par cet indice de réfraction, le rayon de courbure des faces et l'épaisseur au centre.

Il a cependant déjà été proposé de faire varier radialement l'indice de réfraction de l'axe optique d'une lentille ophtalmique vers sa périphérie.

C'est le cas, par exemple, dans le brevet anglais No 1.571.930, et c'est le cas, également, dans la demande de brevet français qui, déposée le 20 Mai 1987 sous le No 87 07084, a été publiée sous le No 2.599.157.

Dans l'un et l'autre cas, il est essentiellement recherché une correction des aberrations.

Plus précisément, dans le brevet anglais No 1.571.930, suivant lequel la variation d'indice de réfraction se fait quasi linéairement, il est de préférence fait en sorte que, grâce à cette variation d'indice de réfraction, les faces concave et convexe de la lentille concernée soient encore effectivement des faces sphériques.

Dans la demande de brevet français No 87 07084, suivant laquelle les faces concave et convexe ne sont pas nécessairement des faces sphériques, il est en principe recherché une minimisation de l'épaisseur critique de la lentille.

Mais, les exemples qui y sont explicités le montrent, l'indice de réfraction ne varie pas nécessairement de manière sensible dans la partie centrale de cette lentille, qui en est pourtant la partie la plus utilisée, et, surtout, la puissance optique de cette lentille ne s'écarte pas de manière sensible de sa puissance géométrique.

La présente invention est fondée sur le fait, jusqu'ici non encore mis en évidence, que, par une variation appropriée d'indice de réfraction, il est au contraire possible de modifier de manière substantielle la puissance optique d'une lentille par rapport à sa puissance géométrique, tout en procédant à une correction satisfaisante de son astigmatisme et de sa courbure de champ.

Elle vise la réalisation de lentilles ophtalmiques unifocales, qui, tout en présentant avantageusement des faces concave et convexe rigoureusement sphériques, et donc faciles à usiner avec précision, et tout en étant suffisamment corrigées de leurs aberrations d'astigmatisme et de courbure de champ, ont une épaisseur maximale réduite.

La présente invention a pour objet une lentille ophtalmique unifocale à épaisseur maximale réduite, présentant des faces convexe et concave sphériques et un indice de réfraction variable radialement de l'axe optique à la périphérie, tandis qu'il est invariant autour de cet axe ainsi que suivant toute direction parallèle à celui-ci, la loi de variation d'indice apportant de soi une puissance substantielle, caractérisée en ce que la loi de variation radiale d'indice de réfraction qui intervient, en conjonction avec les paramètres géométriques, dans un processus connu en soi de calcul de la puissance optique, répond, en chacun de ses points, y compris sur l'axe optique, à la formule :

$$\frac{d\,[grad(n)]}{dr} \neq 0$$

et est telle que cette puissance optique de la lentille soit, en valeur absolue, comprise entre 1,5 et 3,5 fois la puissance géométrique, tandis que les aberrations d'astigmatisme et de courbure de champ, dans un angle de vision d'au plus 30°, sont maintenues à des valeurs au plus égales, en valeurs absolues, respectivement à 0,29 dpt et 0,63 dpt, la puissance géométrique étant calculée par la formule :

2

$$P_G = D_1 + D_2 - \frac{e_0}{n_0} \cdot D_1 \cdot D_2$$

avec

$$D_1 = \frac{n_0 - 1}{R_{cx}}, D_2 = \frac{n_0 - 1}{R_{cv}}$$

où $R_{cx}$ et $R_{cv}$ sont respectivement les rayons de courbure des faces convexe et concave, $e_0$ est l'épaisseur de la lentille sur son axe et $n_0$ l'indice de réfraction sur cet axe.

En bref, la présente invention permet d'associer avantageusement la mise en oeuvre de faces concave et convexe sphériques, l'obtention d'une épaisseur maximale réduite, et le maintien d'une bonne qualité d'image.

Un article "The Gradient Index Optics" de W.N. Charman, paru dans la publication "The Ophthalmic Optician", Jan. 31, 1981, p. 72-84, rappelle les travaux de Wood sur des lentilles à gradient radial d'indice, et indique un calcul, en approximation du premier ordre, de la puissance d'une lentille de ce type où la variation d'indice est parabolique et de la forme

$$n = n_0 - \left( \frac{1}{2f'd} \right) h^2$$

avec $n_0$ indice sur l'axe, n indice à distance radiale h de l'axe, d épaisseur de la lentille et f' distance focale. L'article envisage des applications de gradient axial, radial et sphérique. A partir de la page 80, l'article traite des applications ophtalmiques envisageables. Pour des puissances faibles (0,5 dpt), on pouvait prévoir des lentilles de 50 mm de diamètre avec une différence d'indice de 0,05 entre l'axe optique et la périphérie. Pour des puissances supérieures, on ne peut envisager que des éléments circulaires de 10 mm de diamètre, utilisables seulement en verres double foyer pour la partie destinée à la vision de près. En outre, l'article traite de lentilles plan convexe, pour montrer que le non-parallélisme des faces induit, à partir de variations paraboliques d'indice des aberrations en $h^4$ dans le calcul en approximation du premier ordre, tolérables si l'élément de 10 mm de diamètre présente même épaisseur sur toute sa périphérie, et excessives si l'axe de l'élément n'est pas l'axe de symétrie radiale. Rien n'a trait, dans cet article, aux lentilles unifocales à faces sphériques convexe et concave, ni à des corrections d'aberration par adaptation de la loi d'indice.

Les caractéristiques et avantages de l'invention ressortiront d'ailleurs de la description qui va suivre, à titre d'exemple, en référence aux dessins schématiques annexés sur lesquels :

la figure 1 est une vue en coupe, sans hachure, d'une lentille ophtalmique unifocale suivant l'invention ;

la figure 2 est un diagramme se rapportant aux aberrations d'astigmatisme et de courbure de champ de cette lentille ;

la figure 3 est un diagramme analogue à celui de la figure 2, pour une lentille de même type que la précédente mais répondant à d'autres caractéristiques ;

les figures 4, 5 et 6 sont chacune respectivement analogues aux figures 1, 2, 3, pour d'autres lentilles ophtalmiques unifocales suivant l'invention.

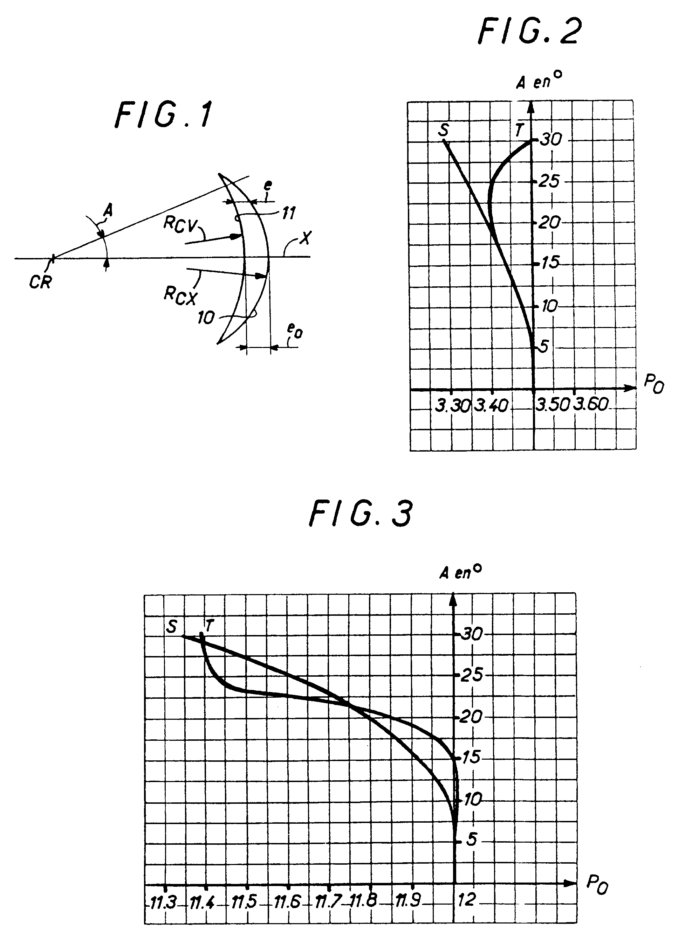

Les figures 1 à 3 illustrent l'application de l'invention à une lentille ophtalmique convergente, et donc de puissance positive.

Elle présente une face avant convexe 10 et une face arrière concave 11.

L'une et l'autre sont sphériques.

Soit $R_{cx}$ le rayon de la face convexe 10, et $R_{cv}$ celui de la face concave 11.

Soit $e_O$ l'épaisseur au centre, mesurée suivant l'axe optique X de l'ensemble.

Si l'indice de réfraction du matériau constitutif de la lentille concernée est uniforme et a pour valeur $n_O$, la puissance de cette lentille se trouve exclusivement déterminée par sa géométrie, en fonction, outre cet indice de réfraction $n_O$, des rayons $R_{CX}$ et $R_{CV}$ de ses faces convexe et concave, et de son épaisseur au centre $e_O$.

Soit $P_G$ cette puissance, dite ci-après puissance géométrique, qui, en pratique, répond à la formule suivante :

$$P_G = D_1 + D_2 - \frac{e_0}{n_0} \cdot D_1 \cdot D_2$$

avec

$$D1 = \frac{n_0 - 1}{R_{CX}} \text{ et } D_2 = \frac{n_0 - 1}{R_{CV}}$$

S'agissant d'une lentille ophtalmique unifocale convergente, l'épaisseur au centre $e_O$ est l'épaisseur maximale, ou critique.

Pour la minimisation de cette épaisseur maximale, il a été proposé, les autres conditions étant égales par ailleurs, et notamment la puissance, la mise en oeuvre d'un indice de réfraction n variable radialement de l'axe optique X de la lentille vers sa périphérie.

Cet indice de réfraction n variant ainsi en fonction de la distance r à l'axe optique X, en pratique dans le même sens que l'épaisseur e de celle-ci mesurée parallèlement à cet axe optique X, la puissance réelle de cette lentille, dite ci-après puissance optique $P_O$, se trouve alors différer légèrement de sa puissance géométrique $P_G$, l'indice de réfraction n entrant dans son calcul.

Suivant l'invention, la loi de variation de l'indice de réfraction n est choisie de manière à ce que, en valeur absolue, la puissance optique $P_O$ de la lentille soit nettement supérieure à sa puissance géométrique $P_G$, la puissance optique $P_O$ étant calculée en prenant comme indice de réfraction $n_O$ l'indice de réfraction de la lentille sur son axe optique X.

De préférence, cette loi de variation est choisie de manière à ce que, en valeur absolue, la puissance optique $P_O$ soit au moins égale à 1,5 fois la puissance géométrique $P_G$.

Ainsi, suivant l'invention, la variation d'indice de réfraction est mise à profit pour "créer", au premier chef, de la puissance optique.

En pratique, la loi de variation de l'indice de réfraction n retenue est choisie de manière à ce que, en chacun des points de la lentille, elle réponde à la relation suivante :

$$\frac{d\,[\,grad\,n\,]}{dr} \neq O$$

dans laquelle, comme indiqué ci-dessus, r est la distance d'un tel point à l'axe optique X.

Cette relation implique que, en tout point de la lentille, y compris dans sa zone centrale, la variation de l'indice de réfraction n n'est pas linéaire, mais présente au contraire un certain gradient.

Ainsi, suivant une caractéristique de l'invention, c'est par un effet de gradient, et non par un effet de distribution, que la variation de l'indice de réfraction est mise à profit pour "créer" de la puissance optique.

Bien entendu, les aberrations, et, en particulier, celles d'astigmatisme et de courbure de champ, doivent, corollairement, être corrigées.

Mais, suivant l'invention, les corrections correspondantes sont limitées, le parti étant pris, non pas de les pousser à leur extrême, mais de faire en sorte qu'elles soient justes suffisantes pour que les aberrations restent dans les limites de tolérance usuellement jugées convenables, telles qu'elles existent pour les lentilles ophtalmiques conventionnelles de même type.

Ainsi, suivant l'invention, la variation de l'indice de réfraction n est choisie de manière à privilégier l'augmentation, en valeur absolue, de la puissance plutôt que la correction des aberrations, pour pouvoir disposer de lentilles ophtalmiques unifocales, qui, tout en présentant des faces concave et convexe sphériques, et donc aisément usinables, sont avantageusement moins lourdes et plus esthétiques, grâce à l'augmentation de puissance obtenue, et qui sont cependant suffisamment corrigées des aberrations d'astigmatisme et de courbure de champ pour que celles-ci ne soient pas supérieures à celles usuellement jugées comme acceptables.

En pratique, il suffit, suivant l'invention, de se fixer les caractéristiques géométriques de la lentille recherchée, en l'espèce les rayons $R_{CX}$ et $R_{CV}$ de ses faces convexe et concave, et son épaisseur au centre $e_O$, pour que l'homme de l'art sache choisir la loi de variation de l'indice de réfraction n qui, tout en permettant, comme recherché, d'obtenir une puissance optique $P_O$ nettement supérieure à la puissance géométrique $P_G$, conduise à une correction suffisante des aberrations d'astigmatisme et de courbure de champ.

Cette loi de variation de l'indice de réfraction n peut par exemple être exprimée de la manière suivante :

$$n = n_O + \sum_{j\,=\,1\,\text{à}\,5} a_j\, r^{2j}$$

$n_O$ étant l'indice de réfraction sur l'axe optique X, $a_j$ des coefficients numériques, et, comme déjà indiqué ci-dessus, r la distance à l'axe optique.

On donnera ci-après, à titre non limitatif, les valeurs numériques relatives à deux exemples possibles de réalisation pour une lentille ophtalmique unifocale convergente.

## EXEMPLE 1

$R_{CX}$ = 160 mm
$R_{CV}$ = 237 mm
$e_O$ = 3 mm

Pour cette géométrie, et avec un indice de réfraction $n_O$ égal à 1,5, la puissance géométrique est la suivante :

$P_G = 1$ dpt

Suivant l'invention, on met en oeuvre une variation d'indice de réfraction pour laquelle les coefficients $a_j$ de la loi correspondante sont les suivants :

$a_1 = -4,0761.10^{-4}$

$a_2 = -10^{-8}$

$a_3 = O$

$a_4 = -5.10^{-13}$

$a_5 = 6.10^{-16}$

Avec une telle variation, de l'indice de réfraction, la puissance optique $P_O$ obtenue est la suivante :

$P_O = 3,5$ dpt.

Elle est donc 3,5 fois supérieure à la puissance géométrique $P_G$.

Corollairement, l'indice de réfraction n pour un point situé à une distance radiale de l'axe optique X égale à 15 mm, cette distance radiale correspondant en pratique à un angle de vision de l'ordre de 30° par rapport à cet axe optique, est le suivant :

$n_{15mm} = 1,417$

La différence $\Delta n$ entre cet indice de réfraction n et l'indice de réfraction $n_O$ sur l'axe optique X est donc égale à 0,083.

Elle est donc supérieure, en valeur absolue, à 0,07.

Les aberrations d'astigmatisme et de courbure de champ que présente par ailleurs la lentille ophtalmique convergente ainsi obtenue ressortent du diagramme de la figure 2.

Sur ce diagramme figurent, en abscisses, la puissance optique $P_O$, en dioptries, et, en ordonnées, l'angle de vision A par rapport à l'axe optique X, en degrés.

Ainsi qu'on le sait, cet angle de vision A est apprécié par rapport au centre de rotation CR de l'oeil, avec la lentille ophtalmique supposée être placée de manière à avoir sa face arrière concave 11 à une distance de ce centre de rotation CR sensiblement égale à 25 mm.

Sur le diagramme de la figure 2, la courbe S correspond à la focale sagittale, qui est celle contenue dans le plan de la figure 1, et la courbe T correspond à la focale tangentielle, qui est celle contenue dans un plan perpendiculaire au précédent.

Ainsi qu'on le sait, la différence T-S correspond à l'astigmastisme Ast, et l'expression $[\frac{1}{2}(T + S) - P_O]$ à la courbure de champ CC.

Il ressort du diagramme de la figure 2, qui a été volontairement limité à 30°, cet angle de vision correspondant normalement au balayage vertical maximal de l'oeil humain, que l'astigmatisme Ast reste inférieur à 0,21 dioptrie, en atteignant cette valeur pour 30°, et que la courbure de champ CC reste inférieure, en valeur absolue, à 0,14 dioptrie, en atteignant cette valeur pour 25°.

Soit :

$Ast_{max} = 0,21$ dpt à 30°

$CC_{max} = -0,13$ dpt à 25°

De telles valeurs d'aberration d'astigmatisme et de courbure de champ sont parfaitement acceptables.

En outre, la courbure de champ étant négative, elle peut aisément être compensée par accommodation.


EXEMPLE 2

$R_{CX} = 100$ mm

$R_{CV} = 4815$ mm

$e_O = 7$ mm

d'ou

$P_G = 5$ dpt pour $n_O = 1,5$

$a_1 = -4,83.10^{-4}$

$a_2 = -2,3.10^{-7}$

$a_3 = 2.10^{-10}$

$a_4 = -5.10^{-13}$

$a_5 = -5.10^{-16}$

$n_O = 1,5$

d'où

$P_O = 12$ dpt $\qquad n_{15mm} = 1,39$

$\Delta n = -0,11$

$Ast_{max} = -0,17$ à 25°

$CC_{max} = -0,63$ à 30°

Ainsi qu'on le notera, et bien que de puissance élevée, la lentille ophtalmique convergente correspondante reste suffisamment corrigée.

Les courbes S et T de cet exemple 2 sont représentées sur la figure 3.

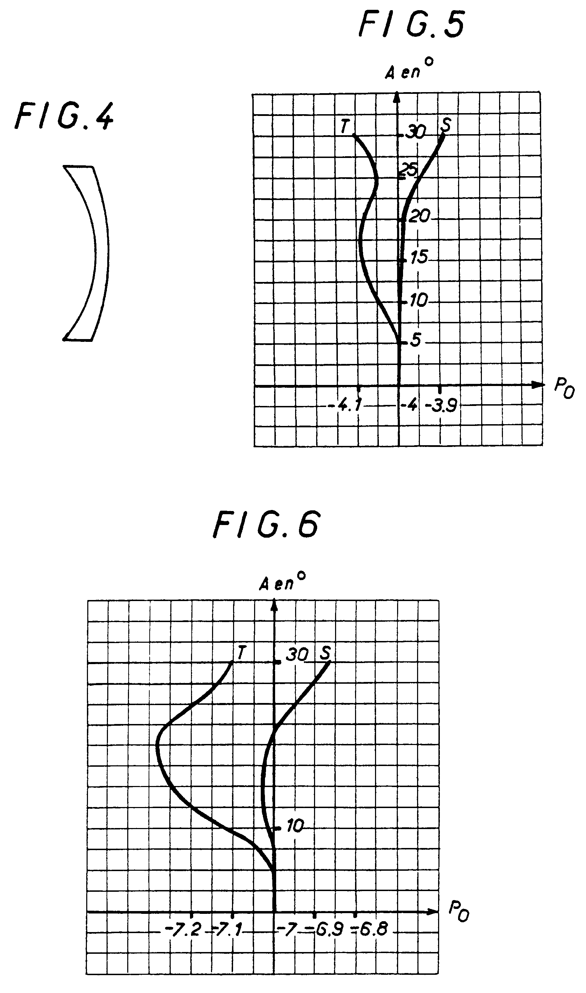

Les figures 4 à 6 illustrent l'application de l'invention à la réalisation d'une lentille ophtalmique unifocale divergente, et donc de puissance négative.

On en donnera ci-après deux exemples pratiques de réalisation, dans les mêmes conditions que ci-dessus.

EXEMPLE 3

$R_{CX} = 160$ mm

$R_{CV} = 100$ mm

$e_O = 2$ mm

d'où

$P_G = -2$ dpt pour $n_O = 1,5$

$a_1 = 5,33.10^{-4}$

$a_2 = -4,5.10^{-7}$

$a_3 = 0$

$a_4 = 5.10^{-13}$

$a_5 = 10^{-16}$

$n_O = 1,5$

d'où

$P_O = -4$ dpt          $n_{15mm} = 1,586$

$\Delta n = +0,086$

$Ast_{max} = -0,23$ dpt à 30°

$CC_{max} = 0,03$ dpt à 15°

La figure 5 montre les courbes S et T de cet exemple 3.

EXEMPLE 4

$R_{CX} = 200$ mm

$R_{CV} = 77$ mm

$e_O = 3$ mm

d'où

$P_G = -4$ dpt pour $n_O = 1,5$

$a_1 = 5,017.10^{-4}$

$a_2 = -5.10^{-7}$

$a_3 = 0$

$a_4 = 5.10^{-13}$

$a_5 = 1,5.10^{-16}$

$n_O = 1,5$

d'où

$P_O = -7$ dpt          $n_{15mm} = 1,577$

$\Delta n = +0,077$

$Ast_{max} = -0,25$ dpt à 20°

$CC_{max} = -0,15$ dpt à 20°

La figure 6 montre les courbes S et T de cet exemple 4.

Comme précédemment, les aberrations, laissées dans des limites acceptables, vont dans le bon sens.

Le tableau suivant reprend les valeurs principales des exemples précédents en leur joignant ceux d'autres exemples 5 à 10.

| | $P_O$ (dioptries) | $P_G$ (dioptries) | $\Delta n$ ($n_{15mm} - n$) | $Ast_{max}$ (dioptries) | $CC_{max}$ (dioptries) |
|---|---|---|---|---|---|
| EXEMPLE 1 | 3,5 | 1 | − 0,083 | 0,21 | − 0,13 |
| EXEMPLE 2 | 12 | 5 | − 0,11 | − 0,17 | − 0,63 |
| EXEMPLE 3 | − 4 | − 2 | 0,092 | − 0,23 | − 0,03 |
| EXEMPLE 4 | − 7 | − 4 | 0,083 | − 0,25 | − 0,15 |
| EXEMPLE 5 | 10 | 3,5 | − 0,119 | − 0,15 | − 0,51 |
| EXEMPLE 6 | 7 | 2 | − 0,10 | 0,09 | − 0,37 |
| EXEMPLE 7 | 4,5 | 1,5 | − 0,07 | 0,27 | − 0,12 |
| EXEMPLE 8 | − 3 | − 1 | 0,088 | − 0,14 | − 0,03 |
| EXEMPLE 9 | − 6 | − 3 | 0,094 | − 0,28 | − 0,14 |
| EXEMPLE 10 | − 10 | − 5 | 0,079 | − 0,29 | − 0,13 |

Ainsi qu'on le notera, la différence d'indice de réfraction n entre l'axe optique et un point situé à une distance radiale de celui-ci égale à 15 mm est, en valeur absolue, toujours supérieure à 0,07, en étant en pratique le plus souvent de l'ordre de 0,1.

Ainsi qu'on le notera, également, le rapport de la puissance optique $P_O$ à la puissance géométrique $P_G$ atteint 3,5 dans les exemples 1 et 6.

Pour la réalisation pratique de la loi de variation d'indice retenue, il est mis en oeuvre des techniques usuelles en ce domaine.

Ces techniques ne relevant pas de la présente invention, elles ne seront pas décrites ici.

Par exemple, appliquées à un barreau, elles conduisent à des surfaces d'iso-indice cylindriques, et le barreau ainsi traité est ensuite débité en palets propres à être usinés en lentilles ophtalmiques.

Bien entendu, l'invention n'est pas limitée aux exemples donnés, mais s'étend à toute variante d'exécution.

En outre, si, dans ce qui précède, il a été supposé, pour faciliter l'exposé, qu'une lentille unifocale suivant l'invention formait par elle-même une entité, il va de soi que, l'invention pouvant tout aussi bien s'appliquer aux lentilles multifocales, et par exemple aux lentilles bifocales, elle pourrait participer à la constitution d'une telle lentille multifocale, en ne formant dès lors ainsi qu'une partie de celle-ci.

## Revendications

1. Lentille ophtalmique unifocale à épaisseur maximale réduite, présentant des faces convexe (10) et concave (11) sphériques et un indice de réfraction (n) variable radialement de l'axe optique (X) à la périphérie, tandis qu'il est invariant autour de cet axe (X) ainsi que suivant toute direction parallèle à celui-ci, la loi de variation d'indice apportant de soi une puissance substantielle, caractérisée en ce que la loi de variation radiale d'indice de réfraction (n) qui intervient, en conjonction avec les paramètres géométriques, dans un processus connu en soi de calcul de la puissance optique, répond, en chacun de ses points, y compris sur l'axe optique (X), à la formule :

$$\frac{d\,[grad(n)]}{dr} \neq 0$$

et est telle que cette puissance optique ($P_o$) de la lentille soit, en valeur absolue, comprise entre 1,5 et 3,5 fois la puissance géométrique ($P_G$), tandis que les aberrations d'astigmatisme (Ast) et de courbure de champ (C.C.), dans un angle de vision d'au plus 30°, sont maintenues à des valeurs au plus égales, en valeurs absolues, respectivement à 0,29 dpt et 0,63 dpt, la puissance géométrique ($P_G$) étant calculée par la formule :

$$P_G = D_1 + D_2 - \frac{e_0}{n_0} \cdot D_1 \cdot D_2$$

avec

$$D_1 = \frac{n_0 - 1}{R_{CX}}, D_2 = \frac{n_0 - 1}{R_{CV}}$$

où $R_{CX}$ et $R_{CV}$ sont respectivement les rayons de courbure des faces convexe (10) et concave (11), $e_0$ est l'épaisseur de la lentille sur son axe (X) et $n_0$ l'indice de réfraction sur cet axe.

2. Lentille unifocale selon la revendication 1, caractérisée en ce que, la loi de variation d'indice (n) étant exprimée par la formule :

$$n\ (r) = n_0 + \sum_{j\,=\,1}^{5} a_j\ r^{2j}$$

où
$n_0$ est l'indice sur l'axe optique (X),
r est la distance à l'axe optique (X),
et $a_j$ un coefficient de dimensions $|L|^{-2j}$, et j un entier,
le terme $a_1$ présente un signe opposé à celui de la puissance optique ($P_o$) de la lentille.

3. Lentille unifocale selon la revendication 2, caractérisée en ce que la différence d'indice de réfraction ($\Delta n$) entre l'indice ($n_0$) sur l'axe optique (X) et l'indice (n) en un point situé à une distance radiale de cet axe égale à 15 mm est, en valeur absolue, supérieure à 0,07, en étant de préférence de l'ordre de 0,1.

## Patentansprüche

1. Monofokale ophthalmische Linse mit einer verringerten maximalen Dicke, welche aufweist eine konvexe (10) und eine konkave (11) sphärische Seite und einen Brechungsindex (n), der radial von der optischen Achse (X) zu der Peripherie hin veränderlich ist, während er um diese Achse (X) herum sowie auch entlang jeder Richtung parallel zu dieser unveränderlich ist, wobei das Veränderungsgesetz des Indexes an sich eine wesentliche Brechkraft verursacht, dadurch gekennzeichnet, daß das Gesetz der radialen Variation des Brechungsindexes (n), welches vorliegt in Zusammenhang mit den geometrischen Parametern, in einem an sich bekannten Rechenverfahren für die optische Brechkraft bei jedem seiner Punkte, auch auf der optischen Achse (X), folgender Formel genügt:

$$\frac{d[grad(n)]}{dr} \neq 0$$

und welches derart ist, daß diese optische Brechkraft ($P_O$) der Linse im Absolutwert zwischen 1,5 und 3,5 mal der geometrischen Brechkraft ($P_G$) liegt, wobei die Aberretionen von Astigmatismus (Ast) und Bildkrümmung (C.C.) in einem Sichtwinkel von maximal 30° gehalten werden auf und maximal gleich in Absolutwerten jeweils 0,29 dpt und 0,63 dpt, wobei die geometrische Brechkraft mittels der folgenden Formel berechnet ist:

$$P_G = D_1 + D_2 - \frac{e_0}{n_0} \cdot D_1 \cdot D_2$$

wobei

$$D_1 = \frac{n_0 - 1}{R_{CX}} \; und \; D_2 = \frac{n_0 - 1}{R_{CV}}$$

wobei $R_{CX}$ und $R_{CV}$ jeweils die Krümmungsradien der konvexen (10) bzw. konkaven (11) Seite sind, $e_o$ die Dicke der Linse auf ihrer Achse (X) ist und $n_0$ der Brechungsindex auf dieser Achse ist.

2. Monofokale Linse gemäß Anspruch 1, <u>dadurch gekennzeichnet</u>, daß das Veränderungsgesetz des Indexes (n) durch folgende Formel ausgedrückt ist:

$$n(r) = n_0 + \sum_{j=1}^{5} a_j \, r^{2j}$$

wobei $n_0$ der Index auf der optischen Achse X ist,
r der Abstand von der optischen Achse X ist, und
$a_j$ ein Koeffizient der Dimension $|L|^{-2j}$, und j eine ganze Zahl ist,
wobei der Faktor $a_1$ ein entgegengesetztes Vorzeichen hat als jenes der optischen Brechkraft ($P_o$) der Linse.

3. Monofokale Linse gemäß Anspruch 2, <u>dadurch gekennzeichnet,</u> daß die Brechungsindexdifferenz ($\Delta n$) zwischen dem Index ($n_0$) auf der optischen Achse (X) und dem Index (n) an einem Punkt, der unter einem radialen Abstand von dieser Achse gleich 15 mm ist, im Absolutwert, größer als 0,07 ist, wobei er bevorzugt etwa 0,1 beträgt.

## Claims

1. A unifocal ophthalmic lens of reduced maximum thickness, having spherical convex and concave faces (10 and 11 respectively) and a refractive index (n) which is variable radially from the optical axis (X) to the periphery while it is constant about said axis (X) and in every direction parallel thereto, the law in respect of the variation in index affording of itself a substantial power, characterised in that the law in respect of radial variation in the refractive index (n) which is involved, in conjunction with the geometrical parameters, in a per se known procedure for calculation of the optical power, corresponds, at each of its points including on the optical axis (X), to the formula:

$$\frac{d \, [grad(n)]}{dr} \neq 0$$

and is such that said optical power ($P_O$) of the lens is in absolute value between 1.5 and 3.5 times the geometrical power ($P_G$) while the aberrations in respect of astigmatism (Ast) and field curvature (C.C.) in an angle of vision of at most 30°, are maintained at values which are at most equal in absolute values to 0.29 dpt and 0.63 dpt respectively, the geometrical power ($P_G$) being calculated by the formula:

$$P_G = D_1 + D_2 - \frac{e_O}{n_O} . D_1 . D_2$$

with

$$D_1 = \frac{n_O - 1}{R_{CX}}, D_2 = \frac{n_O - 1}{R_{CV}}$$

wherein $R_{CX}$ and $R_{CV}$ are respectively the radii of curvature of the convex face (10) and the concave face (11), $e_O$ is the thickness of the lens on its axis (X) and $n_O$ is the refractive index on said axis.

2. A unifocal lens according to claim 1 characterised in that, the law in respect of the variation in index (n) being expressed by the formula:

$$n(r) = n_O + \sum_{j=1}^{5} a_j \, r^{2j}$$

wherein

$n_O$ is the index on the optical axis (X),

r is the distance to the optical axis (X), and

$a_j$ is a coefficient of dimensions $|L|^{-2j}$, and j is an integer, the term $a_1$ has a sign opposite to that of the optical power ($P_O$) of the lens.

3. A unifocal lens according to claim 2 characterised in that the difference in refractive index ($\Delta n$) between the index ($n_O$) on the optical axis (X) and the index (n) at a point disposed at a radial distance from said axis that is equal to 15 mm is in absolute value greater than 0.07, preferably being of the order of 0.1.

FIG.1

FIG.2

FIG.3

FI G.5

FI G.4

FI G.6